# EUROPÄISCHE PATENTSCHRIFT

(11) **EP 1 366 938 B1**
(45) Veröffentlichungstag und Bekanntmachung des Hinweises auf die Patenterteilung: **11.04.2007**
(21) Anmeldenummer: 03010116.6
(22) Anmeldetag: 05.05.2003
(51) Int. Cl.: B60H 1/24

(54) **Temperierungssystem, insbesondere für ein Kraftfahrzeug**
Cooling system, in particular for a motor vehicle
Système de refroidissement, en particulier pour véhicule automobile

(30) Priorität: 31.05.2002 DE 10224297
(43) Veröffentlichungstag der Anmeldung: 03.12.2003
(73) Patentinhaber: Behr GmbH & Co. KG, 70469 Stuttgart (DE)
(72) Erfinder: Burk, Roland, Dipl.-Ing., 70469 Stuttgart (DE); Lindner, Björn, Dipl.-Ing. (FH), Troy, MI 48085 (US)
(74) Vertreter: Grauel, Andreas

(56) Entgegenhaltungen:
- EP-A- 1 078 789
- DE-C- 19 643 188
- US-A1- 2001 011 834
- US-B1- 6 361 429
- US-B1- 6 384 098

## Beschreibung

Die Erfindung betrifft ein Temperierungssystem, insbesondere für ein Kraftfahrzeug, gemäß dem Oberbegriff des Anspruches 1. Dies wird z.B. in der US 2001011834 gezeigt.

Zur Erwärmung oder Kühlung der Luft im Innenraum eines Kraftfahrzeuges sind Heizungs- oder Klimaanlagen bekannt. Hierbei wird, ggf. in Abhängigkeit von Temperatursensoren, temperierte Luft dem Innenraum durch spezielle Luftöffnungen zugeführt. Jedoch lassen derartige Temperierungssysteme insbesondere in Hinblick auf das thermische Wohlbefinden der Insassen noch Wünsche offen.

Ferner sind Umluftsysteme bekannt, bei denen die Innenluft wieder dem Innenraum zugeführt wird und die insbesondere dann benutzt werden, wenn keine Frischluftzufuhr, also bspw. in einem Tunnel, jedoch eine Luftumwälzung gewünscht wird. Hierbei wird die Innenluft an einer oder mehreren Stellen im Innenraum mit Hilfe eines Gebläses abgesaugt, mittels im Innenraum verlaufenden Leitungen den gewünschten Zuführöffnungen zugeleitet und wieder dem Innenraum des Fahrzeuges zugeführt.

Es ist Aufgabe der Erfindung, ein eingangs genanntes Temperierungssystem zu verbessern.

Diese Aufgabe wird gelöst durch ein Temperierungssystem mit den Merkmalen des Anspruchs 1.

Erfindungsgemäß wird ein Temperierungssystem, insbesondere für ein Kraftfahrzeug, vorgesehen, wobei zwischen den Umschließungsflächen des Innenraums und der Außenwand zumindest teilweise Hohlräume vorgesehen sind, durch die Abluft vom Innenraum leitbar ist. Dabei bilden die Hohlräume ein Luftkanalsystem, durch die die Abluft aus dem Innenraum geführt wird, bevor diese als Fortluft durch geeignet angebrachte Öffnungen das Kraftfahrzeug verlässt. Durch die Hinterlüftung der dem Innenraum zugewandten Umschließungsflächen erfolgt eine Temperierung derselben, d.h. es erfolgt eine deutliche Komfortsteigerung für die Passagiere.

Vorzugsweise ist mindestens ein Gebläse zum Absaugen und/oder zur Verteilung und Weiterleitung der Abluft vorgesehen. Dieses Gebläse ist vorzugsweise im Bereich der Hutablage, einer der C-Säulen, im Bereich des hinteren Sitzes oder des Kofferraumes vorgesehene.

Gemäß einer bevorzugten Ausführungsform sind die Hohlräume, also das Luftkanalsystem, nach außen, d.h. zur Außenwand hin, isoliert. Dies schützt bspw. vor Wärmeverlust im Winter oder Erwärmung im Sommer und erhöht die Effektivität des Abluftstroms bei der Temperierung des Innenraums. Die Effektivität wird ferner dadurch erhöht, dass die Hohlräume nach innen, d.h. zum Innenraum hin, gut wärmeleitend sind.

Vorzugsweise wird die Abluft durch zumindest einen Teil der Umschließungsflächen, der luftdurchlässig ist, abgesaugt. Hierbei wird vorzugsweise der luftdurchlässige Teil der Umschließungsflächen durch eine Perforation gebildet.

Vorzugsweise ist ein Klappensystem zur Steuerung des Abluftstroms vorgesehen. Ein derartiges Klappensystem ermöglicht eine bedarfsgerechte Steuerung des Abluftstroms. So kann die Temperaturverteilung im Innenraum im Heiz- oder Kühlbetrieb durch eine optimale Wahl des Luftabsaugortes verbessert werden.

Vorzugsweise ist eine Steuerung des Abluftstroms vorgesehen, die über eine Fernsteuerung, eine Timerfunktion und/oder Temperatursensoren Frischluft und/oder Abluft aus dem Innenraum zumindest durch Teile des Luftkanalsystems leitet. Dies ermöglicht bspw. eine Standkühlung im Sommer.

Vorzugsweise ist die Zuführung eines temperierten Teil-Luftstromes von der Klimaanlage vorgesehen, welcher ebenfalls durch das Luftkanalsystem leitbar ist.

Im folgenden wird die Erfindung anhand dreier Ausführungsbeispiele unter Bezugnahme auf die Zeichnung im einzelnen erläutert. In der Zeichnung zeigen:
- Fig. 1: eine schematische Draufsicht auf den Himmel eines Kraftfahrzeugs gemäß dem ersten Ausführungsbeispiel;
- Fig. 2: eine Seitenansicht von Fig. 1;
- Fig. 3: eine schematische Darstellung des Luftstromes gemäß dem zweiten Ausführungsbeispiel; und
- Fig. 4: eine Seitenansicht des dritten Ausführungsbeispiels.

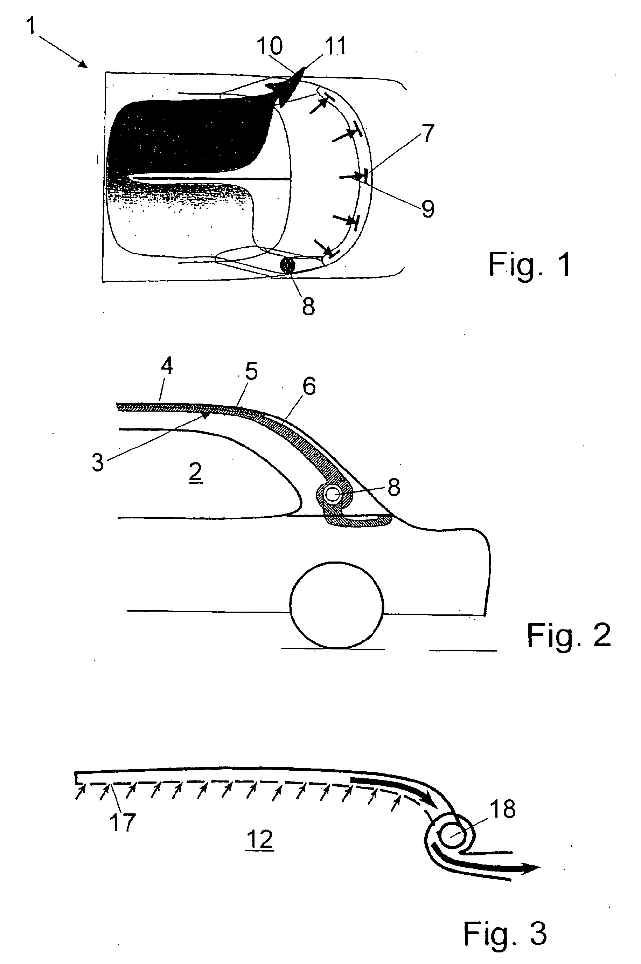

Ein Kraftfahrzeug 1 mit einer Klimaanlage (nicht dargestellt) weist einen Innenraum 2 mit Umschließungsflächen 3 sowie Außenwänden 4 auf. Hierbei sind im Bereich des Fahrzeughimmels sowie der C-Säulen zwischen den Umschließungsflächen 3 und den Außenwänden 4 Hohlräume 5 vorgesehen, welche derart als Luftkanalsystem 6 ausgebildet sind, dass in diesen Hohlräumen 5 Luft strömen kann. Gemäß dem ersten Ausführungsbeispiel wird diese Luft im Bereich der Hutablage durch Einlass-Öffnungen 7 mit Hilfe eines Gebläses 8 angesaugt, wie in Fig. 1 durch Pfeile 9 angedeutet, über die Hohlräume 5 in einer der C-Säulen zu einer Seite des Fahrzeughimmels geleitet, auf dieser Seite nach vorn und auf der anderen Seite wieder zurück geleitet und anschließend über die zweite C-Säule und eine Auslass-Öffnung 10 nach außen als Fortluft an die Umgebung abgegeben, wie durch den Pfeil 11 in Fig. 1 angedeutet. Damit ein möglichst guter Wärmeübergang zwischen dem Innenraum 2 des Kraftfahrzeuges 1 und dem Luftkanalsystem 6 ermöglicht wird, sind die entsprechenden Umschließungsflächen 3, d.h. insbesondere die Innenverkleidung des Kraftfahrzeuges 1, möglichst dünn ausgebildet und ermöglichen eine gute thermische Verbindung. Im Gegensatz dazu ist zwischen dem Luftkanalsystem 6 und den Außenwänden des Kraftfahrzeuges 1 eine Isolation vorgesehen, um Außeneinflüsse in diesen Bereichen, d.h. Wärme infolge hoher Außentemperaturen oder Kälte infolge niedriger Außentemperaturen, zu minimieren oder ganz auszuschließen. Hierbei dient die Abluft, welche etwa die gleiche Temperatur wie der Innenraum 2 hat, als eine Art Restwärme- oder Restkältepuffer gegenüber der Umgebungstemperatur.

Gemäß dem vorliegenden Ausführungsbeispiel ist der Hohlraum 5 im Fahrzeughimmel mittels einer etwa mittig in Fahrzeuglängsrichtung verlaufenden Trennwand derart ausgestaltet, dass die Abluftverteilung, d.h. die Kälte/Wärme-Verteilung bei vertretbarem Druckverlust den Anforderungen für eine schnelle und optimale Temperierung des Innenraumes 2 entspricht. Selbstverständlich ist auch eine andere Luftführung und/oder auch die Verwendung eines Teilstromes der Abluft möglich.

Gemäß dem in Fig. 3 dargestellten zweiten Ausführungsbeispiel, welches im wesentlichen dem ersten Ausführungsbeispiel entspricht, erfolgt die Ableitung der Abluft aus dem Innenraum 12 durch eine Mehrzahl von kleinen Löchern, d.h. einer Perforation (Einlass-Öffnungen 17), in der Innenverkleidung des Fahrzeughimmels, wobei das Ansaugen der Abluft mittels eines Gebläses 18 erfolgt, welches die Abluft direkt nach außen fördert. Vorzugsweise sind die einzelnen Einlass-Öffnungen 17 in Ort, Anzahl und Größe so auf der innenliegenden Umschließungsfläche verteilt, dass in Kombination mit den Zuluftöffnungen eine gleichförmige, zugfreie Gesamtdurchströmung des Innenraumes 12 mit minimalen oder gewünschten örtlichen Temperaturunterschieden erzielt wird.

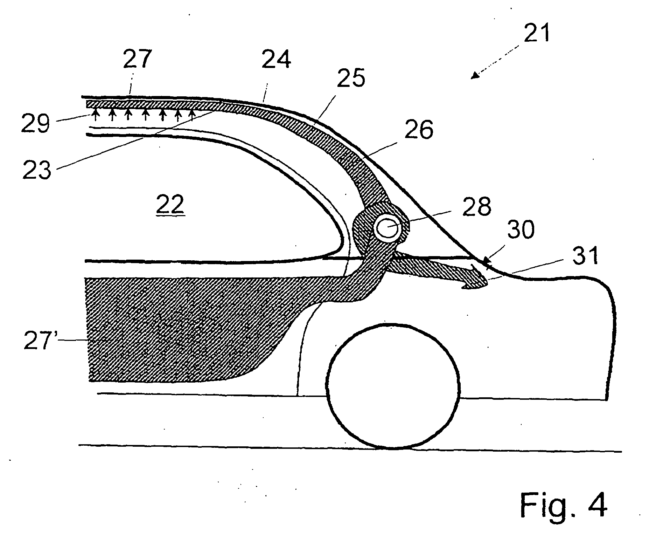

Im folgenden wird unter Bezugnahme auf Fig. 4 das dritte Ausführungsbeispiel beschrieben. Hierbei erfolgt neben einer Absaugung der Abluft aus dem Innenraum 22 durch Einlass-Öffnungen 27 im Fahrzeughimmel, welche den Einlass-Öffnungen 17 des zweiten Ausführungsbeispiels entsprechen, wobei das Absaugen durch Pfeile 29 angedeutet ist, ein Absaugen durch Einlass-Öffnungen 27' in den Türen, die entsprechend den Einlass-Öffnungen 27 ausgebildet sind. Das Absaugen erfolgt mit Hilfe eines Gebläses 28, wobei die Abluft in das zwischen der Umschließungsfläche 23 und der Außenwand 24 angeordnete, von einem oder mehreren Hohlräumen 25 gebildete Luftkanalsystem 26 gesaugt und hierin zum Gebläse 28 gesaugt und von dort weitergefördert wird. Das Gebläse 28 ist gemäß dem dritten Ausführungsbeispiel im Bereich einer oder beider C-Säulen des Kraftfahrzeugs 21 angeordnet. Die Abluft oder wenigstens ein Teil hiervon wird durch das Gebläse 28 zu einer Auslass-Öffnung 30 nach außen an die Umgebung gefördert, wie durch den Pfeil 31 angedeutet ist.

Gemäß einer Variante kann auch eine Luftabsaugung im Fußraum erfolgen. Auch hierfür ist der Fußraum doppelwandig auszuführen, damit die dem Innenraum zugewandte Wand definiert hinterlüftet werden kann.

Gemäß einer weiteren Variante, welche einer Kombination des dritten Ausführungsbeispiels und der vorstehenden Variante entspricht, ist ein Klappensystem zur Steuerung des Abluftstroms vorgesehen, wobei - je nach Steuerung - die Abluft nur einem Teil des Luftkanalsystems zugeführt und/oder aus diesem abgeführt werden kann, z.B. im Sommer nur dem Fahrzeughimmel und im Winter nur den Türen und/oder die Fußraumumrandung.

Gemäß einer weiteren Variante kann eine Steuerung des Abluftstroms dahingehend vorgesehen sein, dass über eine Fernsteuerung, eine Timerfunktion und/oder Temperatursensoren Frischluft oder Innenraumluft durch den Fahrzeughimmel bei geparkten Kraftfahrzeugen geleitet wird, um die Aufheizung des Innenraumes zu verringern. Insbesondere kann entsprechend dem zweiten Ausführungsbeispiel die Perforation des Dachhimmels dazu genutzt werden, die sich unter diesem sammelnde heiße Luft abzusaugen und damit den Innenraum relativ kühl zu halten.

Ferner ist gemäß einer weiteren Variante zusätzlich die Zuführung eines temperierten Teil-Luftstromes von der Klimaanlage möglich, welcher ebenfalls durch das Luftkanalsystem geleitet wird. Dies ist insbesondere für die Fußraum-Umschließungsflächen möglich.

### Bezugszeichenliste

- 1, 21: Kraftfahrzeug
- 2, 12, 22: Innenraum
- 3, 23: Umschließungsfläche
- 4, 24: Außenwand
- 5, 25: Hohlraum
- 6, 26: Luftkanalsystem
- 7, 17, 27, 27': Einlass-Öffnung
- 8, 18, 28: Gebläse
- 9, 29: Pfeil
- 10, 30: Auslass-Öffnung
- 11, 31: Pfeil

## Patentansprüche

1. Temperierungssystem, insbesondere für ein Kraftfahrzeug (1; 21), mit einen Innenraum (2; 12; 22) umschließenden Umschließungsflächen (3; 23), welche von einer Außenwand (4; 24) umgeben sind und zwischen den Umschließungsflächen (3; 23) und der Außenwand (4; 24) zumindest teilweise Hohlräume (5; 25) vorgesehen sind, durch die Abluft vom Innenraum (2; 12; 22) leitbar ist und die Abluft nach außen leitbar ist, wobei mindestens ein Gebläse (8; 18; 28) zum Absaugen und/oder zur Verteilung und Weiterleitung der Abluft vorgesehen ist, wobei die Abluft durch zumindest einen Teil der Umschließungsflächen, der luftdurchlässig ist, abgesaugt wird, wobei die Hohlräume (5; 25) nach außen isoliert sind, **dadurch gekennzeichnet, dass** die Hohlräume (5; 25) nach innen gut wärmeleitend sind.

2. Temperierungssystem nach Anspruch 1, **dadurch gekennzeichnet, dass** mindestens das Gebläse (8; 18; 28) im Bereich der Hutablage, einer der C-Säulen, im Bereich des hinteren Sitzes oder des Kofferraumes vorgesehen ist.

3. Temperierungssystem nach Anspruch 1 oder 2, **dadurch gekennzeichnet, dass** der luftdurchlässige Teil der Umschließungsflächen durch eine Perforation gebildet wird.

4. Temperierungssystem nach einem der vorhergehenden Ansprüche, **dadurch gekennzeichnet, dass** ein Klappensystem zur Steuerung des Abluftstroms vorgesehen ist.

5. Temperierungssystem nach einem der vorhergehenden Ansprüche, **dadurch gekennzeichnet, dass** eine Steuerung des Abluftstroms vorgesehen ist, die über eine Fernsteuerung, eine Timerfunktion und/oder Temperatursensoren Frischluft und/oder Abluft aus dem Innenraum (2; 12; 22) zumindest durch Teile des Luftkanalsystems (6; 26) leitet.

6. Temperierungssystem nach einem der vorhergehenden Ansprüche, **dadurch gekennzeichnet, dass** die Zuführung eines temperierten TeilLuftstromes von der Klimaanlage vorgesehen ist, welcher ebenfalls durch das Luftkanalsystem (6; 26) leitbar ist.

## Claims

1. Cooling system, in particular for a motor vehicle (1; 21), with enclosing surfaces (3; 23) that enclose an inside space (2; 12; 22), which are surrounded by an outer wall (4; 24) with hollow spaces (5; 25) provided at least in part between the enclosing surfaces (3; 23) and the outer wall (4; 24), through which air extracted from the inside space (2; 12; 22) can be passed and the extracted air can be discharged to the outside, at least one fan (8; 18; 28) being provided in order to extract and/or distribute and pass on the extracted air, such that the extracted air is drawn off through at least part of the enclosing surfaces which is permeable to air, the hollow spaces (5; 25) being insulated on the outside, **characterised in that** the hollow spaces (5; 25) conduct heat well towards the inside.

2. Cooling system according to Claim 1, **characterised in that** at least the fan (8; 18; 28) is provided in the area of the parcel shelf, or one of the C-columns, or in the area of the rear seat, or in the area of the baggage compartment.

3. Cooling system according to Claims 1 or 2, **characterised in that** the air-permeable part of the surrounding surfaces is formed by a perforation.

4. Cooling system according to any of the preceding claims, **characterised in that** a valve system is provided for controlling the flow of the extracted air.

5. Cooling system according to any of the preceding claims, **characterised in that** a control system for the flow of extracted air is provided, which by remote control, by a timer function and/or by virtue of temperature sensors, passes fresh air and/or extracted air from the inside space (2; 12; 22) through at least parts of the air duct system (6; 26).

6. Cooling system according to any of the preceding claims, **characterised in that** a cooled partial air flow is supplied from the air-conditioning unit, which can also be passed through the air duct system (6; 26).

## Revendications

1. Système de climatisation, en particulier pour un véhicule automobile (1 ; 21), avec des surfaces d'enceinte (3 ; 23) entourant un espace intérieur (2 ; 12; 22) qui sont entourées par une paroi extérieure (4 ; 24) et des espaces creux (5 ; 25), à travers lesquels l'air d'échappement peut être guidé à partir de l'espace intérieur (2 ; 12 ; 22) et l'air d'échappement peut être guidé vers l'extérieur, sont prévus au moins partiellement entre les surfaces d'enceinte (3 ; 23) et la paroi extérieure (4 ; 24), au moins un ventilateur (8 ; 18 ; 28) étant prévu pour l'aspiration et/ou pour la répartition et la transmission de l'air d'échappement, l'air d'échappement étant aspiré à travers au moins une partie des surfaces d'enceinte qui est perméable à l'air, les espaces creux (5 ; 25) étant isolés vers l'extérieur, **caractérisé en ce que** les espaces creux (5 ; 25) sont très conducteurs vers l'intérieur.

2. Système de climatisation selon la revendication 1, **caractérisé en ce qu'**au moins le ventilateur (8 ; 18 ; 28) est prévu dans la zone de la plage arrière, de l'une des colonnes C, dans la zone du siège arrière ou du coffre.

3. Système de climatisation selon la revendication 1 ou 2, **caractérisé en ce que** la partie des surfaces d'enceinte qui est perméable à l'air est formée par une perforation.

4. Système de climatisation selon l'une quelconque des revendications précédentes, **caractérisé en ce qu'**il est prévu un système à clapets pour le réglage du courant d'air d'échappement.

5. Système de climatisation selon l'une quelconque des revendications précédentes, **caractérisé en ce qu'**il est prévu un réglage du courant d'air d'échappement qui guide l'air frais et/ou l'air d'échappement hors de l'espace intérieur (2 ; 12 ; 22) au moins à travers des parties du système de gaines d'air (6 ; 26) au moyen d'une commande à distance, d'une fonction minuterie et/ou de détecteurs de température.

6. Système de climatisation selon l'une quelconque des revendications précédentes, **caractérisé en ce qu'**il est prévu l'amenée d'un courant d'air partiel climatisé à partir de l'installation de climatisation, lequel courant peut être également guidé à travers le système de gaines d'air (6 ; 26).
